# EUROPÄISCHE PATENTSCHRIFT

(11) **EP 3 362 664 B1**
(45) Veröffentlichungstag und Bekanntmachung des Hinweises auf die Patenterteilung: **10.04.2019**
(21) Anmeldenummer: 16781815.2
(22) Anmeldetag: 14.10.2016
(51) Int. Cl.: F02D 41/00, F02B 29/04

(54) **STEUERN EINER EIN KÜHLMITTEL FÖRDERNDEN PUMPE IN EINEM LADEGASKÜHLKREIS**
CONTROLLING A PUMP CONVEYING A COOLANT IN A CHARGING GAS COOLING CIRCUIT
COMMANDE D'UNE POMPE TRANSPORTANT UN FLUIDE DE REFROIDISSEMENT DANS UN CIRCUIT DE REFROIDISSEMENT DE GAZ DE SURALIMENTATION

(30) Priorität: 15.10.2015 DE 102015117592
(43) Veröffentlichungstag der Anmeldung: 22.08.2018
(73) Patentinhaber: Volkswagen Aktiengesellschaft, 38440 Wolfsburg (DE)
(72) Erfinder: HORN, Hauke, 31228 Peine (DE); EGERMANN, Jan, 31518 Gifhorn (DE); MANNIGEL, Dieter, 38116 Braunschweig (DE)
(74) Vertreter: MFG Patentanwälte Meyer-Wildhagen Meggle-Freund Gerhard PartG mbB
(86) Internationale Anmeldenummer: PCT/EP2016/074813
(87) Internationale Veröffentlichungsnummer: WO 2017/064307

(56) Entgegenhaltungen:
- DE-A1- 19 719 792
- DE-A1-102007 056 360
- DE-A1-102009 006 966
- DE-A1-102011 011 822

## Beschreibung

Die vorliegende Erfindung betrifft ein Verfahren und eine Vorrichtung zum Steuern einer ein Kühlmittel fördernden Pumpe in einem Ladegaskühlkreis zum Kühlen eines Ladegases für einen Verbrennungskraftmaschine.

In einer Verbrennungskraftmaschine wird zum Verbrennen von Kraftstoff ein Gas, z.B. (komprimierte) Luft und optional auch Abgas einem Verbrennungsraum (z.B. einem oder mehreren Zylindern) der Verbrennungskraftmaschine zugeführt. Das der Verbrennungskraftmaschine zugeführte Gas zur Verbrennung des Kraftstoffs wird im Folgenden auch als Ladegas bezeichnet und kann sowohl Luft, insbesondere komprimierte Luft, als auch Abgas enthalten. Um einen hohen Verbrennungsgrad zu erreichen, kann es vorteilhaft sein, die Temperatur des Ladegases unterhalb einer bestimmten Temperatur zu halten, um somit eine gewisse Schwellwertdichte des Ladegases zu erreichen. Aufgrund von Umgebungseinflüssen und/oder von dem Ladegas zugemischten Abgas kann die Temperatur des Ladegases stark variieren, insbesondere je nach angefordertem Fahrdrehmoment und/oder Fahrleistung schnell schwanken, bspw. in einem Bereich von 50 Millisekunden bis 0,5 Sekunden um einen Faktor von zwischen 2 und 10 variieren.

Um das Ladegas geeignet vor Zuführen in den Verbrennungsraum der Verbrennungskraftmaschine zu kühlen, wird im Stand der Technik ein Ladegaskühlsystem verwendet. Durch einen von dem Ladegas umströmten Wärmetauscher strömt dabei ein Kühlmittel, welches von einer Pumpe gefördert wird, und durchströmt ferner einen Fahrzeugkühler, insbesondere einen Niedertemperatur-Kühler zum Kühlen des Kühlmittels.

Es ist beobachtet worden, dass in herkömmlichen Ladeluftkühlsystemen das nach Wärmeaustausch mit dem Wärmetauscher ausströmende Ladegase relativ hohe Temperaturen erreichen kann, insbesondere bei stark schwankenden Fahrleistungsanforderungen. Dabei kann es sogar zum Kochen des Kühlmittels am Austritt des Ladeluftkühlers kommen.

Um dieses Problem zu vermindern, wurde im Stand der Technik eine modellbasierte Vorsteuerung inklusive eines PID-Reglers eingesetzt.

Beispielsweise offenbart die deutsche Offenlegungsschrift DE 10 2011 011 822 A1 ein Verfahren zum Temperieren eines strömenden Fluids auf eine vorgegebene Solltemperatur. Ein erstes Fluid wird durch eine erste Seite eines Wärmetauschers geleitet und ein zweites Fluid durch eine zweite Seite des Wärmetauschers geleitet. Der Wärmetauscher ermöglicht einen Wärmeaustausch zwischen dem ersten Fluid und dem zweiten Fluid. In Abhängigkeit einer Eingangstemperatur des ersten Fluids wird eine thermische Eingangsleistung bestimmt. In Abhängigkeit einer vorgegebenen Solltemperatur des ersten Fluids wird eine thermische Sollleistung des ersten Fluids am Ausgang des Wärmetauschers bestimmt. Aus der Eingangsleistung und der Sollleistung des ersten Fluids wird ein erforderlicher thermischer Leistungsfluss zwischen der ersten Seite und der zweiten Seite des Wärmetauschers bestimmt und in Abhängigkeit des Leistungsflusses wird eine thermische Leistung des zweiten Fluids eingestellt. Somit kann der Leistungsfluss des zweiten Fluids eingestellt werden und eine Vorsteuerung realisiert werden, welche die Temperatur des ersten Fluids einstellt.

Die konventionell durchgeführten Verfahren erreichen jedoch typischerweise nur eine langsame und eine späte Kühlungskorrektur, was zur Folge haben kann, dass das Kühlmittel, insbesondere in dynamischen Lastbereichen, d.h. zeitlich schnell und betragsmäßig stark schwankenden Fahrleistungsanforderungen, zum Kochen oder Abkochen gebracht werden kann. Teilweise hat man im Stand der Technik auf ein Überwachen der Saugrohrtemperatur und/oder Regelung der Saugrohrtemperatur verzichtet.

Aufgrund der zu hohen Temperatur der Ladeluft kann eine Verbrennung innerhalb der Verbrennungsräume der Verbrennungskraftmaschine nicht unter allen Bedingungen optimal durchgeführt und/oder gesteuert werden. Bei zu geringer Ladelufttemperatur kommt es bei AGR-Konzepten zur Taupunktunterschreitung und einhergehendem Versotten des Ladegaskühlers. Daher wird mit der Kühlmittelpumpe auf empirisch ermittelte Ladegassolltemperaturen geregelt.

Es ist daher eine Aufgabe der vorliegenden Erfindung, ein Verfahren und eine Vorrichtung zum Steuern einer ein Kühlmittel fördernden Pumpe in einem Ladegaskühlkreis zum Kühlen eines Ladegases für eine Verbrennungskraftmaschine bereitzustellen, wobei insbesondere eine Temperatur des Ladegases genauer eingestellt werden kann als momentan im Stand der Technik möglich ist.

Die Aufgabe wird durch das Verfahren und die Vorrichtung gemäß den unabhängigen Ansprüchen gelöst. Die abhängigen Ansprüche spezifizieren besondere Ausführungsformen der vorliegenden Erfindung.

Gemäß einem Aspekt der vorliegenden Erfindung ist ein Verfahren zum Steuern einer ein Kühlmittel fördernden Pumpe in einem Ladegaskühlkreis zum Kühlen eines Ladegases für eine Verbrennungskraftmaschine bereitgestellt. Dabei weist das Verfahren die Merkmale gemäß Anspruch 1 auf.

Das Verfahren kann Hardware und/oder Software implementiert werden. Das Verfahren kann insbesondere durch ein Computerprogramm implementiert werden, welches in einen Prozessor geladen werden kann und ausgeführt werden kann. Das Kühlmittel kann insbesondere ein herkömmliches flüssiges Kühlmittel umfassen. Mittels des Ansteuersignals kann die Pumpe hinsichtlich ihrer Förderkapazität (z.B. Massenstrom des Kühlmittels) gesteuert werden. Das Ansteuersignal kann z.B. ein elektrisches und/oder optisches und/oder mechanisches Signal umfassen. Der Ladegaskühlkreis kann mehrere Leitungsabschnitte umfassen, welche nicht notwendigerweise kreisförmig geformt sein müssen, sondern Abschnitte beliebiger Geometrie, etwa gerade Abschnitte und/oder gekrümmte Abschnitte umfassen können.

Das Ladegas kann Umgebungsluft und/oder (durch einen Turbolader) komprimierte Umgebungsluft und/oder von der Verbrennungskraftmaschine ausgegebenes Abgas umfassen. Die Eintrittstemperatur des Ladegases in den Wärmetauscher kann als die Temperatur des Ladegases vor Eintritt in den Wärmetauscher angesehen werden. Die Eintrittstemperatur kann gemessen, durch Simulation bestimmt oder auf andere Weise abgeschätzt werden. Der Wärmetauscher kann ein Leitungsgeflecht mit großer (innerer und äußerer) Oberfläche aufweisen, wobei das Ladegas an der Oberfläche des Leitungssystems und/oder Leitungsnetzes zum Austausch von Wärme vorbeigeführt wird und wobei innerhalb des Leitungssystems das Kühlmittel innerhalb des Ladegaskühlkreises strömt.

Das Ermitteln der Soll-Kühlleistung kann arithmetische und/oder logische Berechnungsschritte umfassen, welche die Eintrittstemperatur des Ladegases und die Soll-Austrittstemperatur des Ladegases berücksichtigen. Die Soll-Austrittstemperatur des Ladegases kann einen fest eingestellten und/oder variierenden Wert annehmen. Die Soll-Austrittstemperatur kann derart gewählt sein, dass eine optimale Verbrennung von Kraftstoff innerhalb der Verbrennungsräume der Verbrennungskraftmaschine erfolgen kann. Die Soll-Kühlleistung kann im Allgemeinen mit Q' = m*_{f}* c*ₚ* ΔT ermittelt werden. Hierbei ist der Massenstrom m*_{f,}* die spezifische Wärmekapazität des Gases ist c*ₚ* und die Temperaturdifferenz zwischen der Gaseintrittstemperatur und der Soll-Austrittstemperatur des Ladegases ist ΔT.

Die Eintrittstemperatur des Ladegases kann während eines Betriebes eines Fahrzeuges, welches die Verbrennungskraftmaschine aufweist, starken und schnellen Schwankungen unterworfen sein. Ferner kann auch ein Ladegasmassenstrom während des Betriebs der das Fahrzeug antreibenden Verbrennungskraftmaschine starken Schwankungen unterworfen sein. Die Soll-Kühlleistung kann insbesondere auch basierend auf einem Ladegasmassenstrom, der zum Wärmeaustausch über den Wärmetauscher geleitet wird, bestimmt und/oder ermittelt werden. Die Soll-Kühlleistung kann als ein kontinuierliches (analoges) Signal oder als ein digitales (diskretes) Signal ermittelt werden. Die Eintrittstemperatur kann als ein kontinuierliches (analoges) oder als digitales (diskretes) Signal in Abhängigkeit der Zeit erhalten werden. Die zeitliche Änderung der Soll-Kühlleistung kann durch einen Analogschaltkreis oder einen Digitalschaltkreis bestimmt werden. Insbesondere kann ein zeitlicher Verlauf der Eintrittstemperatur erhalten werden und ein zeitlicher Verlauf der Soll-Kühlleistung basierend auf dem zeitlichen Verlauf der Eintrittstemperatur und einer (z.B. konstanten) Soll-Austrittstemperatur ermittelt werden. Die zeitliche Änderung der Soll-Kühlleistung kann ebenfalls aus einem ermittelten zeitlichen Verlauf der Soll-Kühlleistung bestimmt werden. Das Berücksichtigen der zeitlichen Änderung der Soll-Kühlleistung (neben der Berücksichtigung der Soll-Kühlleistung) zur Bereitstellung des Ansteuersignals für die Pumpe kann effektiv ermöglichen, ein Abkochen des Kühlmittels im Ladegaskühlkreis zu verhindern. Um das Abkochen zu vermeiden, kann gemäß Ausführungsform der vorliegenden Erfindung früh das Pumpentastverhältnis angehoben werden, d.h. die Förderkapazität der Pumpe leicht angehoben werden.

Somit kann durch Anwendung des vorgeschlagenen Verfahrens ein Überhitzen des Kühlmittels verhindert und infolge dessen die Verbrennungskraftmaschine unter allen Umgebungsbedingungen effektiver betrieben werden.

Das Bereitstellen des Ansteuersignals kann ein Erzeugen eines Rechtecksignals umfassen, dessen Tastverhältnis basierend auf der Soll-Kühlleistung und der zeitlichen Änderung der Soll-Kühlleistung bestimmt wird. Die Pumpe kann mittels des Rechtecksignals alternierend an- und abgestellt werden, um eine Förderkapazität der Pumpe einzustellen. Dabei kann das Tastverhältnis zwischen 0% und 100% schwanken, wobei ein Tastverhältnis von 100% einem kontinuierlichen Betrieb der Pumpe entsprechen kann und ein Tastenverhältnis von 0% einem Abschalten der Pumpe entsprechen kann, so dass kein Kühlmittel gefördert wird. Damit können herkömmlich verfügbare Pumpen mittels des Ansteuersignals gesteuert werden.

Das Bestimmen der zeitlichen Änderung der Soll-Kühlleistung kann ein Ermitteln einer ersten Soll-Kühlleistung und einer zweiten Soll-Kühlleistung, die einen Zeitabstand von zwischen z.B. 10 ms und 500 ms haben, aufweisen. In anderen Ausführungsformen kann die Soll-Kühlleistung kontinuierlich in Form eines analogen oder digitalen Signals ermittelt werden. Ferner kann das Verfahren das Bestimmen einer Differenz zwischen der ersten Soll-Kühlleistung und der zweiten Soll-Kühlleistung umfassen. Damit kann eine einfache Methodik zur Bestimmung der zeitlichen Änderung der Soll-Kühlleistung durchgeführt werden, was eine Implementierung des Verfahrens erleichtern kann.

Das Bestimmen der zeitlichen Änderung der Soll-Kühlleistung kann ferner ein Bilden eines Quotienten aus der Differenz und dem Zeitabstand umfassen. Somit kann auf diskrete Weise ein Differenzenquotient ermittelt werden, welcher eine gute Indikation der zeitlichen Änderung der Soll-Kühlleistung sein kann.

Das Bereitstellen des Ansteuersignals kann ferner ein Bestimmen eines zeitlichen Verlaufs einer zeitlichen Änderung der Soll-Kühlleistung aufweisen. Dieser zeitliche Verlauf der zeitlichen Änderung der Soll-Kühlleistung kann wiederum auf einem zuvor erhaltenen bzw. ermittelten zeitlichen Verlauf der Soll-Kühlleistung basieren. Damit kann eine (zeitliche) Folge von zeitlichen Änderungen der Soll-Kühlleistung bestimmt sein, wobei dieser zeitliche Verlauf ein Rauschen (z.B. durch Bestimmungsartefakte bzw. Messartefakte) aufweisen kann. Durch ein Tiefpass-Filtern kann das Rauschen in dem zeitlichen Verlauf der zeitlichen Änderung der Soll-Kühlleistung vermindert werden, um somit eine Robustheit des Verfahrens zu verbessern. Der Verlauf der zeitlichen Änderung der Soll-Kühlleistung kann ferner Tiefpass-gefiltert werden, um eine gefilterte zeitliche Ableitung der Soll-Kühlleistung zu erhalten. Bei dem Tiefpass-Filtern können hohe Frequenzen (schnelle zeitlichen Änderungen) des Verlaufs der zeitlichen Änderung der Soll-Kühlleistung in ihrer Amplitude vermindert werden. Eine Zeitkonstante des Tiefpass-Filtern kann in Abhängigkeit der spezifischen Anwendung ausgewählt sein und je nach Umgebungstemperatur von 200 ms bis zu 2000 ms betragen.

Das Ansteuersignal kann ferner basierend auf der Soll-Kühlleistung und der gefilterten zeitlichen Änderung der Soll-Kühlleistung bestimmt werden. Damit kann das Ansteuersignal in zuverlässiger Weise bestimmt werden. Auch die Soll-Kühlleistung kann gemäß anderen Ausführungsformen der Erfindung Tiefpass-gefiltert werden und die Tiefpass-gefilterte Soll-Kühlleistung kann zur Bestimmung des Ansteuersignals herangezogen werden. Die Sollkühlleistung wird üblicherweise auf 500 ms gefiltert.

Der Zeitabstand (zwischen der ersten Soll-Kühlleistung und der zweiten Soll-Kühlleistung) und/oder eine Grenzfrequenz des Tiefpass-Filterns kann in Abhängigkeit einer Umgebungstemperatur eingestellt werden. Damit kann das Ansteuern der Pumpe auch von der Umgebungstemperatur abhängen, um die Zuverlässigkeit der Ladegaskühlung weiter zu verbessern.

Das Bereitstellen des Ansteuersignals kann ferner aufweisen:
Bestimmen eines ersten Signals basierend auf der Soll-Kühlleistung und einer Umgebungs- oder Kühlmitteltemperatur, wobei das erste Signal mit steigender Soll-Kühlleistung ansteigt;
Bestimmen eines zweiten Signals mittels eines PID-Reglers basierend auf einer Differenz zwischen der Sollaustrittstemperatur des Ladegases und einer tatsächlichen Austrittstemperatur des Ladegases aus dem Wärmetauscher;
Bestimmen eines dritten Signals basierend auf der gefilterten zeitlichen Änderung der Soll-Kühlleistung; und
Addieren des ersten Signals, des zweiten Signals und des dritten Signals, um das Ansteuersignal zu erhalten.

Ein erstes Modul einer Steuervorrichtung kann das erste Signal bestimmen, ein zweites Modul kann das zweite Signal bestimmen und ein drittes Modul kann das dritte Signal bestimmen. Die Module können z.B. als verschiedene Hard- und/oder Softwaremodule- oder als Hierarchien innerhalb eines Moduls ausgeführt sein. Als Eingangsgrößen können insbesondere alle drei Module bzw. Hierarchien die Umgebungstemperatur, die Gaseintrittstemperatur, einen Soll-Austrittstemperaturwert und einen Ladegasmassenstrom empfangen. Das erste Signal kann z.B. (im Wesentlichen) proportional zu der Soll-Kühlleistung bestimmt werden. Der PID-Regler kann ein Proportionalglied, ein Integrationsglied und ein Differenzierglied umfassen, welche jeweils die Differenz zwischen der Soll-Austrittstemperatur des Ladegases und der tatsächlichen Austrittstemperatur des Ladegases empfangen. Der PID-Regler muss jedoch nicht als Eingangsgröße die Soll-Kühlleistung oder eine davon abgeleitete Größe enthalten. Durch eine Unterteilung in verschiedene Module, welche das erste Signal, das zweite Signal und das dritte Signal ausgeben, kann eine Wartung des Verfahrens und auch eine Zuverlässigkeit des Verfahrens verbessert werden. Die Signale, d.h. das erste Signal, das zweite Signal und das dritte Signal können z.B. elektrische und/oder optische Signale umfassen. Zur Durchführung des Verfahrens kann eine arithmetisch-logische-Einheit eingesetzt werden.

Das Bestimmen des dritten Signals kann ferner auf einer Umgebungstemperatur basieren, wobei eine Amplitude des dritten Signals bei negativen Umgebungstemperaturen und/oder bei Umgebungstemperaturen über 30°C weniger angehoben wird als bei Umgebungstemperaturen zwischen 0°C und 20°C. Damit kann eine effektive Amplitudenkorrektur vorgenommen werden und das dritte Signal insbesondere bei Umgebungstemperaturen zwischen 0°C und 20°C ein größeres Gewicht relativ zu dem ersten Signal und dem zweiten Signal haben. In dem Temperaturbereich zwischen 0°C und 20°C einer Umgebungstemperatur kann gerade ein Risiko eines Überhitzens bzw. Abkochens des Kühlmittels erhöht sein. Dieses Risiko kann durch höheres Bewerten des dritten Signals in diesem Umgebungslufttemperaturbereich abgeschwächt werden.

Das Ermitteln der Soll-Kühlleistung kann ferner auf einen Massenstrom des Ladegases basieren. Der Massenstrom kann als Masse (oder z.B. Anzahl von Teilchen) von Ladegas pro Zeit, welche über den Wärmetauscher strömt, definiert sein. Der Massenstrom kann auch in einem zeitlichen Verlauf ermittelt (gemessen, simuliert oder abgeschätzt) werden. Der Massenstrom des Ladegases kann aufgrund von dynamischen Fahrleistungsanforderungen starken zeitlichen Schwankungen unterworfen sein. Damit kann der Ladegasmassenstrom eine beträchtliche Auswirkung auf die Temperatur des Kühlmittels haben. Eine Berücksichtigung des Gasmassenstroms bei dem Ansteuern der Pumpe kann jedoch das Kühlmittel in einem gewünschten Temperaturbereich halten.

Es wird bemerkt, dass Merkmale, welche im Zusammenhang mit einem Verfahren zum Steuern einer ein Kühlmittel fördernden Pumpe in einem Ladegaskühlkreis zum Kühlen eines Ladegases für eine Verbrennungskraftmaschine erläutert, beschrieben oder eingesetzt worden sind, ebenso gemäß Ausführungsformen der vorliegenden Erfindung für eine Vorrichtung zum Steuern einer ein Kühlmittel fördernden Pumpe in einem Ladegaskühlkreis zum Kühlen eines Ladegases für eine Verbrennungskraftmaschine angewendet, eingesetzt oder bereitgestellt werden können und umgekehrt.

Gemäß einem weiteren Aspekt der vorliegenden Erfindung ist eine Vorrichtung zum Steuern einer ein Kühlmittel fördernden Pumpe in einem Ladegaskühlkreis zum Kühlen eines Ladegases für eine Verbrennungskraftmaschine bereitgestellt, wobei die Vorrichtung ausgebildet ist, ein Verfahren gemäß einer der vorangehenden Ausführungsformen auszuführen.

Die Vorrichtung kann z.B. in einem Motorsteuergerät z.B. als ein Softwaremodul und/oder als ein Hardwaremodul umfasst sein.
Fig. 1 illustriert schematisch einen Ladegaskühlkreis mit einer Vorrichtung zum Steuern einer ein Kühlmittel fördernden Pumpe in dem Ladegaskühlkreis gemäß einer Ausführungsform der vorliegenden Erfindung, welche ausgebildet ist, ein Verfahren gemäß einer Ausführungsform der vorliegenden Erfindung auszuführen;
Fig. 2 illustriert schematisch ein Verfahren gemäß einer Ausführungsform der vorliegenden Erfindung auszuführen;
Fig. 3 illustriert schematisch Module eines Verfahrens zum Steuern einer ein Kühlmittel fördernden Pumpe in einem Ladegaskühlkreis gemäß einer Ausführungsform der vorliegenden Erfindung;
Fig. 4 illustriert schematisch ein Modul, welches in einem Verfahren zum Steuern einer ein Kühlmittel fördernden Pumpe in einem Ladegaskühlkreis gemäß einer Ausführungsform der vorliegenden Erfindung eingesetzt wird.

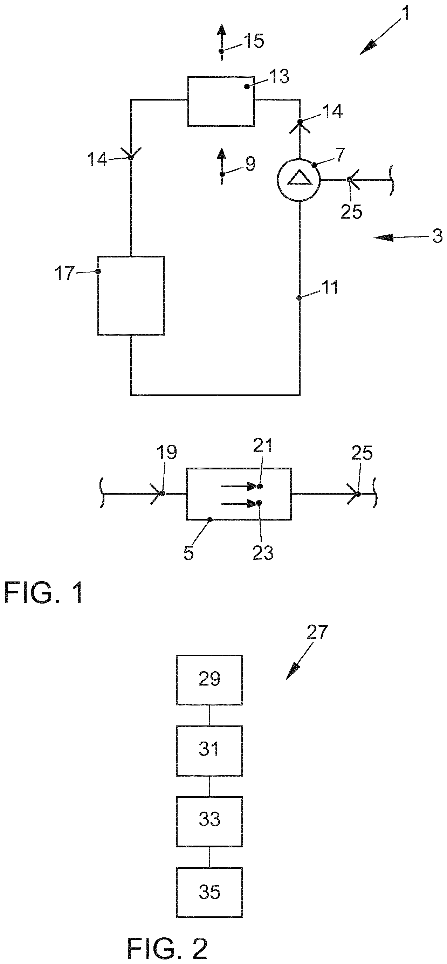

Das in **Figur 1** schematisch dargestellte Ladegaskühlsystem 1 umfasst einen Ladekühlkreis 3 und eine Vorrichtung 5 zum Steuern einer ein Kühlmittel fördernden Pumpe 7 in dem Ladegaskühlkreis 3 zum Kühlen eines Ladegases 9 für eine Verbrennungskraftmaschine gemäß einer Ausführungsform der vorliegenden Erfindung, wobei die Vorrichtung 5 ausgebildet ist, ein Verfahren zum Steuern einer ein Kühlmittel fördernden Pumpe in einem Ladegaskühlkreis gemäß einer Ausführungsform der vorliegenden Erfindung auszuführen.

Der Ladegaskühlkreis 3 umfasst mehrerer Leitungsabschnitte 11, in welchen mittels der Pumpe 7 ein Kühlmittel entlang einer Förderrichtung 14 gefördert werden kann. Die Förderrichtung 14 kann auch in die entgegengesetzte Richtung zeigen. Der Ladegaskühlkreis 3 umfasst einen Wärmetauscher 13 mit einem nicht im Detail illustrierten Leitungssystem, in welchem das Kühlmittel geführt werden kann. Das Leitungssystem des Wärmetauschers 13 hat eine relativ große äußere Oberfläche, über welche das (ungekühlte) Ladegas 9 zum Wärmeaustausch geführt werden kann, um gekühltes Ladegas 15 auszugeben, welches einen Teil, der in dem ungekühlten Ladegas 9 enthaltenen Wärme an das durch den Wärmetauscher 13 fließende Kühlmittel abgegeben hat. Das Kühlmittel wird ferner durch einen Niedertemperaturkühler 17 geleitet, in welchem wiederum das Kühlmittel einen Teil seiner Wärme über den Niedertemperaturkühler 17 an die Umgebung abgeben kann.

Die Vorrichtung 5 erhält ein Signal 19, welches indikativ für eine Eintrittstemperatur T21 des Ladegases 9 in den Wärmetauscher 13 ist. Ferner ermittelt die Vorrichtung 5 eine Soll-Kühlleistung 21, basierend auf der Eintrittstemperatur T21 des Ladegases 9, einer Soll-Austrittstemperatur T22soll des Ladegases 15 aus dem Wärmetauscher 13 und dem Gasmassenstrom des Ladegases 9. Ferner bestimmt die Vorrichtung eine (insbesondere gefilterte) zeitliche Änderung der Soll-Kühlleistung, welche mit Bezugszeichen 23 bezeichnet ist. Basierend auf der Soll-Kühlleistung 21 und der zeitlichen Änderung der Soll-Kühlleistung 23 stellt die Vorrichtung 5 ein Ansteuersignal 25 für die Pumpe 7 bereit, um somit die Pumpe 7 hinsichtlich ihrer Förderkapazität zu steuern.

Das von der Vorrichtung 5 durchgeführte Verfahren 24 ist in **Figur 2** als Blockdiagram dargestellt. In einem Verfahrensschritt 29 umfasst das Verfahren ein Erhalten einer Eintrittstemperatur des Ladegases in einen Wärmetauscher, der zum Austausch von Wärme zwischen dem Ladegas und dem Kühlmittel ausgebildet ist. In einem Verfahrensschritt 31 umfasst das Verfahren Ermitteln einer Soll-Kühlleistung basierend auf der Eintrittstemperatur des Ladegases und einer Sollaustrittstemperatur (T22soll) des Ladegases aus dem Wärmetauscher.
In einem Verfahrensschritt 33 umfasst das Verfahren Bestimmen einer zeitlichen Änderung der Soll-Kühlleistung und in einem Verfahrensschritt 35 umfasst das Verfahren Bereitstellen eines Ansteuersignals für die Pumpe basierend auf der Soll-Kühlleistung und der zeitlichen Änderung der Soll-Kühlleistung.

Um das Überhitzen des Kühlmittels des Ladegaskühlkreises 3 zu verhindern und ein Abkochen zu vermeiden, muss möglichst früh das Pumpentastverhältnis des Ansteuersignals 25 für die Pumpe 7 angehoben werden. Das Anheben des Pumpentastverhältnisses wird gemäß einer Ausführungsform der vorliegenden Erfindung durch die gefilterte Ableitung der Soll-Kühlleistung 21 realisiert. Somit kann die gefilterte zeitliche Ableitung der Soll-Kühlleistung das Pumpentastverhältnis definieren, insbesondere das Ansteuersignal 25 definieren.

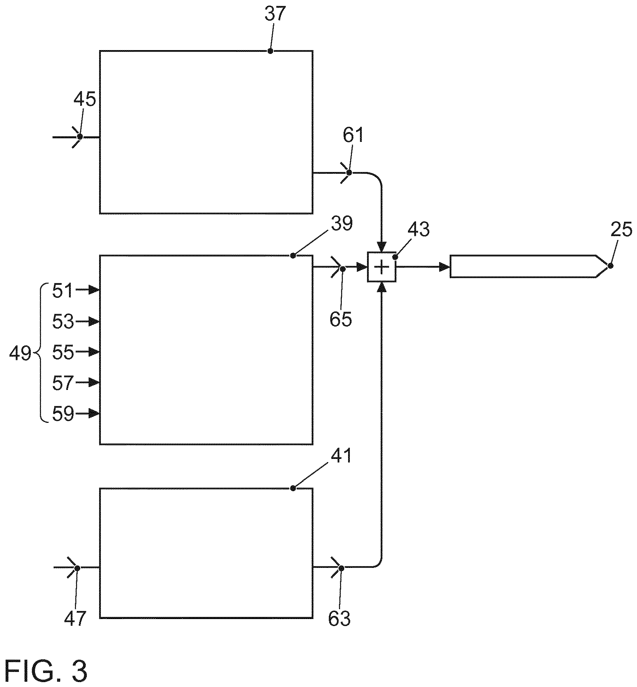

Die Vorrichtung 5 kann die schematisch in **Figur 3** illustrierten Module (z.B. Software oder/und Hardwaremodule 37, 39 und 41) umfassen sowie das Additionsglied 43. Das Vorsteuerungsmodul 37 erhält Eingabesignale 45, das Regelungsmodul 41 erhält Eingabesignale 47 und das Korrekturmodul 39 erhält Eingabesignale 49. Insbesondere können die Eingabesignale 45, 47 und 49 ähnliche oder gleiche Eingabesignale umfassen. Insbesondere umfassen die Eingabesignale 49 ein Signal 51 der Eintrittstemperatur des Ladegases 9, ein Signal 53 der Soll-Austrittstemperatur (T22soll) des Ladegases 15 aus dem Wärmetauscher 13, ein Signal 55 des Gasmassenstroms des Ladegases 9 bzw. 15, ein Signal 57 einer Korrektur (z. B. der T22-Regelabweichung oder der Temperaturdifferenz zwischen Umgebungstemperatur und T22soll) sowie ein Signal 59 einer Umgebungstemperatur von Luft.

Das Vorsteuerungsmodul 37 kann auch als Eingangssignal eine Soll-Kühlleistung erhalten. Das Regelungsmodul 41 kann insbesondere einen PID-Regler aufweisen, welcher ein Ausgabesignal derart bestimmt, dass eine Differenz zwischen einer Soll-Austrittstemperatur (T22soll) und einer tatsächlichen Austrittstemperatur (T22) des Ladegases 15 minimal wird.

Das Vorsteuermodul bestimmt basierend auf der Soll-Kühlleistung 21 und einer Umgebungstemperatur (aus Signal 59 bekannt) ein erstes Signal 61, welches insbesondere mit steigender Soll-Kühlleistung 21 ansteigt. Das Regelungsmodul 41 bestimmt ein zweites Signal 63 basierend auf einer Differenz zwischen der Soll-Austrittstemperatur T22soll des Ladegases 15 und einer tatsächlichen Austrittstemperatur T22 des Ladegases 15 aus dem Wärmetauscher 13. Das Korrekturmodul 39 bestimmt ein drittes Signal 65 basierend auf der gefilterten zeitlichen Änderung 23 der Soll-Kühlleistung 21. Das erste Signal 61, das zweite Signal 62 und das dritte Signal 65 werden mittels des Additionsgliedes 43 addiert, um das Ansteuersignal 25 zu erhalten, welches der Pumpe 7 zugeführt wird.

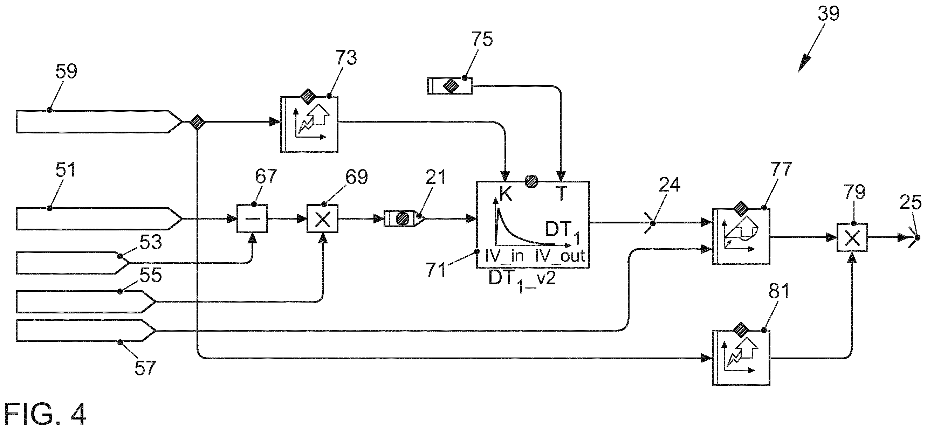

**Figur 4** illustriert schematisch eine Ausführungsform des Korrekturmoduls 39, welches (z.B. zusammen mit den Modulen 37 und 41) in der Vorrichtung 5 umfasst sein kann.

Von einem Eingangssignal 51 der Eintrittstemperatur des Ladegases 9 wird mittels eines Subtraktionsgliedes 67 eine Soll-Austrittstemperatur (Signal 53, T22soll) abgezogen. Das Resultat wird mittels eines Multiplikationsgliedes 69 mit einem Signal 55 des Gasmassenstroms multipliziert. Das Ergebnis der Multiplikation ist die Soll-Kühlleistung 21. Das Ableitungs-und-Filtermodul 71 bestimmt aus der Soll-Kühlleistung 21, insbesondere aus einem zeitlichen Verlauf der Soll-Kühlleistung, oder aus einer Folge von Soll-Kühlleistungen, welche verschiedenen Zeitpunkten entsprechen, eine gefilterte zeitliche Ableitung 24 der Soll-Kühlleistung. Dazu erhält das Verarbeitungsmodul 71 als Eingabe ein mittels einer Dynamikkorrektur 73 korrigiertes Signal 59 der Umgebungstemperatur. Ferner erhält das Ableitungs-und-Filtermodul 71 als Eingabe weitere Parameter 75 zur Konfiguration des Ableitungs-und-Filtermoduls 71. Die Parameter 75 können wie die Dynamikkorrektur 73 in Abhängigkeit der Umgebungstemperatur variieren. Die gefilterte zeitliche Änderung 24 der Soll-Kühlleistung 21 wird zusammen mit dem Signal 57 eines Korrekturfaktors in das Grundkennfeld 77 eingegeben, welches im Wesentlichen eine Abbildung aus der gefilterten zeitlichen Änderung 24 der Soll-Kühlleistung 21 und dem Korrektureingang 57 in eine Dimension vornimmt. Die Ausgabe des Grundkennfeldes 77 wird mittels eines Multiplikationselementes 79 mit dem Signal 59 der Umgebungstemperatur, nachdem es durch ein Amplitudenkorrekturglied 81 modifiziert wurde, multipliziert. Die Ausgabe des Multiplikationsgliedes 79 repräsentiert das Pumpenansteuersignal 25, bzw. dem Additionsglied 65 in Figur 3.

Bei dem Wärmetauscher 13 kann es sich um einen **S**augrohr-integrierten **L**ade**l**uft**k**ühler (SiLLK) handeln. Die Eintrittstemperatur (Signal 51) des Ladegases 9 muss nicht gemessen werden, sondern kann abgeschätzt oder durch Simulation bestimmt sein. Die Förderpumpe 7 kann ferner Gradienten-begrenzt sein, so dass eine Änderung der Förderleistung der Förderpumpe 7 unterhalb einer Gradientenschwelle gehalten wird. Die Eintrittstemperatur T21 des Ladegases kann z.B. zwischen 180°C und 100°C betragen. Die Soll-Austrittstemperatur T22soll kann z.B. zwischen 10°C und 55°C betragen, insbesondere ungefähr 45°C. Die maximale Kühlmitteltemperatur, bevor ein Sieden bzw. Kochen des Kühlmittels auftritt, kann bei etwa 130°C liegen. Der Gasmassenstrom (Signal 55) kann sich z.B. in einem dynamischen Fahrbereich innerhalt von 100ms um einen Faktor bis zu 10 ändern. Die Temperatur des Kühlmittels muss gemäß Ausführungsform der vorliegenden Erfindung nicht direkt gemessen werden, sondern wird sie wird über die Umgebungstemperatur abgeschätzt.

### Bezugszeichenliste

1 Ladegaskühlsystem
3 Ladegaskühlkreis
5 Vorrichtung zum Steuern der Kühlmittelförderpumpe
7 Kühlmittelförderpumpe
9 eintretendes Ladegas
11 Leitungsabschnitte
13 Wärmetauscher
14 Förderrichtung (kann auch in die entgegengesetzte Richtung zeigen)
15 austretendes Ladegas
17 Niedertemperaturkühler
19 Signal der Gaseintrittstemperatur
21 Soll-Kühlleistung
23 zeitliche Änderung der Soll-Kühlleistung
24 gefilterte zeitliche Änderung der Soll-Kühlleistung
25 Ansteuersignal für die Förderpumpe
27 Verfahren
29, 31, 33, 35 Verfahrensschritte
37 erstes Modul
41 zweites Modul
39 drittes Modul
43 Additionsglied
45, 47, 49 Eingangssignale
51 Signal der Eintrittstemperatur des Ladegases
53 Signal der Soll-Austrittstemperatur
55 Signal des Ladegasmassenstroms
57 Signal einer Korrektur
59 Signal der Umgebungstemperatur
61 erstes Signal
63 zweites Signal
65 drittes Signal
67 Subtraktionsglied
69 Multiplikationsglied
71 Filter-und-Ableitungsmodul
73 Dynamikkorrektur
75 Eingangsparameter
77 Grundkennfeld
79 Multiplikationsglied
81 Amplitudenkorrektur

## Patentansprüche

1. Verfahren (27) zum Steuern einer ein Kühlmittel fördernden Pumpe (7) in einem Ladegaskühlkreis (3) zum Kühlen eines Ladegases (9) für eine Verbrennungskraftmaschine, wobei das Verfahren aufweist:
Erhalten (29) einer Eintrittstemperatur (51) des Ladegases (9) in einen Wärmetauscher (13), der zum Austausch von Wärme zwischen dem Ladegas (9) und dem Kühlmittel ausgebildet ist;
Ermitteln (31) einer Soll-Kühlleistung (21) basierend auf der Eintrittstemperatur (51, T21) des Ladegases (9) und einer Sollaustrittstemperatur (T22soll) des Ladegases (15) aus dem Wärmetauscher (13) charakterisiert durch das Bestimmen (33) einer zeitlichen Änderung (23) der Soll-Kühlleistung (21);
Bestimmen eines zeitlichen Verlaufes der zeitlichen Änderung (23) der Soll-Kühlleistung;
Tiefpass-Filtern des Verlaufs der zeitlichen Änderung der Soll-Kühlleistung, um eine gefilterte zeitliche Änderung (24) der Soll-Kühlleistung (21) zu erhalten, wobei eine Grenzfrequenz des Tiefpass-Filterns in Abhängigkeit einer Umgebungstemperatur (59) eingestellt wird; und
Bestimmen und Bereitstellen (35) eines Ansteuersignals (25) für die Pumpe (7) basierend auf der Soll-Kühlleistung (21) und der gefilterten zeitlichen Änderung (23) der Soll-Kühlleistung.

2. Verfahren gemäß Anspruch 1, wobei das Bereitstellen des Ansteuersignals (21) ein Erzeugen eines Rechtecksignals umfasst, dessen Tastverhältnis basierend auf der Soll-Kühlleistung (21) und der zeitlichen Änderung (23) der Soll-Kühlleistung bestimmt wird.

3. Verfahren gemäß Anspruch 1 oder 2, wobei das Bestimmen der zeitlichen Änderung der Soll-Kühlleistung aufweist:
Ermitteln einer ersten Soll-Kühlleistung und einer zweiten Soll-Kühlleistung, die einen Zeitabstand von zwischen 10 ms und 1500 ms haben; und
Bestimmen einer Differenz zwischen der ersten Soll-Kühlleistung und der zweiten Soll-Kühlleistung.

4. Verfahren gemäß dem vorangehenden Anspruch, wobei das Bestimmen der zeitlichen Änderung (23) der Soll-Kühlleistung aufweist:
Bilden eines Quotienten aus der Differenz und dem Zeitabstand.

5. Verfahren gemäß einem der vorangehenden Ansprüche, wenn auf Anspruch 3 rückbezogen, wobei der Zeitabstand in Abhängigkeit einer Umgebungstemperatur (59) eingestellt wird.

6. Verfahren gemäß einem der vorangehenden Ansprüche, wobei das Bereitstellen des Ansteuersignals aufweist:
Bestimmen eines ersten Signals (61) basierend auf der Soll-Kühlleistung (21) und einer Umgebungstemperatur (59) oder Kühlmitteltemperatur, wobei das erste Signal mit steigender Soll-Kühlleistung ansteigt;
Bestimmen, mittels eines PID-Reglers, eines zweiten Signals (63) basierend auf einer Differenz zwischen der Sollaustrittstemperatur (53, T22soll) des Ladegases (15) und einer tatsächlichen Austrittstemperatur (T22) des Ladegases (15) aus dem Wärmetauscher (13);
Bestimmen eines dritten Signals (65) basierend auf der gefilterten zeitlichen Änderung (24) der Soll-Kühlleistung; und
Addieren des ersten Signals, des zweiten Signals und des dritten Signals, um das Ansteuersignal (25) zu erhalten.

7. Verfahren gemäß dem vorangehenden Anspruch, wobei das Bestimmen des dritten Signals (65) ferner auf einer Umgebungstemperatur (59) basiert, wobei eine Amplitude des dritten Signals bei negativen Umgebungstemperaturen und bei Umgebungstemperaturen über 30°C weniger angehoben wird als bei Umgebungstemperaturen zwischen 0°C und 20°C.

8. Verfahren gemäß einem der vorangehenden Ansprüche, wobei das Ermitteln der Soll-Kühlleistung (21) ferner auf einem Massenstrom (55) des Ladegases (9) basiert.

9. Vorrichtung (5) zum Steuern einer ein Kühlmittel fördernden Pumpe (7) in einem Ladegaskühlkreis (3) zum Kühlen eines Ladegases (9) für eine Verbrennungskraftmaschine, wobei die Vorrichtung ausgebildet ist, ein Verfahren (27) gemäß einem der vorangehenden Ansprüche auszuführen.

## Claims

1. Method (27) for controlling a pump (7) conveying a coolant in a charging gas cooling circuit (3) for cooling a charging gas (9) for an internal combustion engine, the method comprising:
obtaining (29) an inlet temperature (51) of the charging gas (9) in a heat exchanger (13) which is designed to exchange heat between the charging gas (9) and the coolant;
ascertaining (31) a target cooling output (21) based on the inlet temperature (51, T21) of the charging gas (9) and a target outlet temperature (T22soll) of the charging gas (15) from the heat exchanger (13), **characterized by**
determining (33) a change (23) of the target cooling output (21) over time;
determining a time profile of the change (23) of the target cooling output over time;
low-pass filtering of the profile of the change of the target cooling output over time in order to obtain a filtered change (24) of the target cooling output (21) over time, a limiting frequency of the low-pass filter being set as a function of an ambient temperature (59); and
determining and providing (35) an activation signal (25) for the pump (7), based on the target cooling output (21) and the filtered change (23) of the target cooling output over time.

2. Method according to Claim 1, wherein providing the activation signal (21) comprises generating a square-wave signal, the mark/space ratio of which is determined on the basis of the target cooling output (21) and the change (23) of the target cooling output over time.

3. Method according to Claim 1 or 2, wherein determining the change of the target cooling output over time comprises:
ascertaining a first target cooling output and a second target cooling output which have a time gap of between 10 ms and 1500 ms; and
determining a difference between the first target cooling output and the second target cooling output.

4. Method according to the preceding claim, wherein determining the change (23) of the target cooling output over time comprises:
forming a ratio of the difference and the time gap.

5. Method according to one of the preceding claims, if referring back to Claim 3, wherein the time gap is set as a function of an ambient temperature (59).

6. Method according to one of the preceding claims, wherein providing the activation signal comprises:
determining a first signal (61) based on the target cooling output (21) and an ambient temperature (59) or coolant temperature, wherein the first signal rises as the target cooling output rises;
determining, by means of a PID controller, a second signal (63) based on a difference between the target outlet temperature (53, T22soll) of the charging gas (15) and an actual outlet temperature (T22) of the charging gas (15) from the heat exchanger (13);
determining a third signal (65) based on the filtered change (24) of the target cooling output over time; and
adding the first signal, the second signal and the third signal in order to obtain the activation signal (25).

7. Method according to the preceding claim, wherein determining the third signal (65) is also based on an ambient temperature (59), wherein an amplitude of the third signal with negative ambient temperatures and with ambient temperatures above 30°C is raised less than with ambient temperatures between 0°C and 20°C.

8. Method according to one of the preceding claims, wherein ascertaining the target cooling output (21) is also based on a mass flow (55) of the charging gas (9).

9. Device (5) for controlling a pump (7) conveying coolant in a charging gas cooling circuit (3) for cooling a charging gas (9) for an internal combustion engine, wherein the device is designed to carry out a method (27) according to one of the preceding claims.

## Revendications

1. Procédé (27) de commande d'une pompe (7) refoulant un réfrigérant dans un circuit de refroidissement de gaz de suralimentation (3) servant à refroidir un gaz de suralimentation (9) pour un moteur à combustion interne, le procédé comprenant :
l'obtention (29) d'une température d'entrée (51) du gaz de suralimentation (9) dans un échangeur de chaleur (13) qui est conçu pour l'échange de chaleur entre le gaz de suralimentation (9) et le réfrigérant ;
la détermination (31) d'une puissance de refroidissement de consigne (21) sur la base de la température d'entrée (51, T21) du gaz de suralimentation (9) et d'une température de sortie de consigne (T22soll) du gaz de suralimentation (15) hors de l'échangeur de chaleur (13) ; **caractérisé par**
la détermination (33) d'une variation dans le temps (23) de la puissance de refroidissement de consigne (21) ;
la détermination d'une évolution dans le temps de la variation dans le temps (23) de la puissance de refroidissement de consigne ;
le filtrage passe-bas de l'évolution de la variation dans le temps de la puissance de refroidissement de consigne, afin d'obtenir une variation dans le temps filtrée (24) de la puissance de refroidissement de consigne (21), une fréquence limite du filtrage passe-bas étant réglée en fonction d'une température ambiante (59) ; et
la détermination et la fourniture (35) d'un signal de commande (25) pour la pompe (7) sur la base de la puissance de refroidissement de consigne (21) et de la variation dans le temps filtrée (23) de la puissance de refroidissement de consigne.

2. Procédé selon la revendication 1, dans lequel la fourniture du signal de commande (21) comporte une génération d'un signal rectangulaire dont le rapport cyclique est déterminé sur la base de la puissance de refroidissement de consigne (21) et de la variation dans le temps (23) de la puissance de refroidissement de consigne.

3. Procédé selon la revendication 1 ou 2, dans lequel la détermination de la variation dans le temps de la puissance de refroidissement de consigne comprend la détermination d'une première puissance de refroidissement de consigne et d'une deuxième puissance de refroidissement de consigne qui ont un intervalle de temps d'entre 10 ms et 1500 ms ; et la détermination d'une différence entre la première puissance de refroidissement de consigne et la deuxième puissance de refroidissement de consigne.

4. Procédé selon la revendication précédente, dans lequel la détermination de la variation dans le temps (23) de la puissance de refroidissement de consigne comprend :
la formation d'un quotient à partir de la différence et de l'intervalle de temps.

5. Procédé selon l'une des revendications précédentes, lorsqu'elles dépendent de la revendication 3, dans lequel l'intervalle de temps est réglé en fonction d'une température ambiante (59).

6. Procédé selon l'une des revendications précédentes, dans lequel la fourniture du signal de commande comprend :
la détermination d'un premier signal (61) sur la base de la puissance de refroidissement de consigne (21) et d'une température ambiante (59) ou d'une température de réfrigérant, le premier signal augmentant au fur et à mesure que la puissance de refroidissement de consigne augmente ;
la détermination, au moyen d'un régulateur PID, d'un deuxième signal (63) sur la base d'une différence entre la température de sortie de consigne (53, T22soll) du gaz de suralimentation (15) et une température de sortie réelle (T22) du gaz de suralimentation (15) hors de l'échangeur de chaleur (13) ;
la détermination d'un troisième signal (65) sur la base de la variation dans le temps filtrée (24) de la puissance de refroidissement de consigne ; et
la somme du premier signal, du deuxième signal et du troisième signal, afin d'obtenir le signal de commande (25).

7. Procédé selon la revendication précédente, dans lequel la détermination du troisième signal (65) est basée en outre sur une température ambiante (59), une amplitude du troisième signal en cas de températures ambiantes négatives et en cas de températures ambiantes supérieures à 30 °C étant moins élevée qu'en cas de températures ambiantes entre 0 °C et 20 °C.

8. Procédé selon l'une des revendications précédentes, dans lequel la détermination de la puissance de refroidissement de consigne (21) est basée en outre sur un débit massique (55) du gaz de suralimentation (9) .

9. Dispositif (5) de commande d'une pompe (7) refoulant un réfrigérant dans un circuit de refroidissement de gaz de suralimentation (3) servant à refroidir un gaz de suralimentation (9) pour un moteur à combustion interne, le dispositif étant conçu pour mettre en oeuvre un procédé (27) selon l'une des revendications précédentes.
